Europäisches Patentamt

**European Patent Office**

Office européen des brevets

(19)

(11) Publication number : **0 419 956 B1**

(12) **EUROPEAN PATENT SPECIFICATION**

(45) Date of publication of patent specification :
19.01.94 Bulletin 94/03

(51) Int. Cl.⁵ : **G01D 5/34**

(21) Application number : 90117657.8

(22) Date of filing : 13.09.90

(54) Encoder disc.

(30) Priority : 25.09.89 US 411691

(43) Date of publication of application :
03.04.91 Bulletin 91/14

(45) Publication of the grant of the patent :
19.01.94 Bulletin 94/03

(84) Designated Contracting States :
AT BE CH DE DK ES FR GB GR IT LI LU NL SE

(56) References cited :
RCA Technical Notes, no. 834, 14 May 1969, A
Publication of RCA, Princeton, NJ, pages 1-2;
John A. Strother: "ANGULAR POSITION SEN-
SOR"
PATENT ABSTRACTS OF JAPAN vol. 11, no.
79 (P-555)(2526) 11 March 1987, & JP-A-61
237013 (TOSHIBA CORP) 22 October 86,
PATENT ABSTRACTS OF JAPAN vol. 9, no.
122 (P-359)(1845) 28 May 1985, & JP-A-60 8714
(TAMAGAWA SEIKI K.K.) 17 January 1986

(56) References cited :
PATENT ABSTRACTS OF JAPAN vol. 9, no.
101 (P-353)(1824) 02 May 1985, & JP-A-59
226822 (MATSUSHITA ELECTRIC IND CO LTD)
20 December 1984,
MEASUREMENT TECHNIQUES. vol. 31, no. 11,
November 1988, New York, US, pages
1053-1055; Pilipovich et al: "SMALL-SIZE
ANGLE-CODE CONVERTER"

(73) Proprietor : **AEROSPACE CONTROLS
CORPORATION**
6310 Lindsey Road
Little Rock, Arkansas 72231 (US)

(72) Inventor : **Malcolm, Timothy M.**
Rt. 7, Box 166
Conway, Arkansas 72032 (US)
Inventor : **Latta, Garland H. Jr.**
611 West Arch
Searcy, Arkansas 72143 (US)

(74) Representative : **Lehn, Werner, Dipl.-Ing. et al**
Hoffmann, Eitle & Partner, Patentanwälte,
Postfach 81 04 20
D-81904 München (DE)

## Description

This invention relates to an encoder disc for an encoder of the type comprising a scanning unit for scanning the encoder disc to measure an angular position characteristic of the encoder disc, the encoder disc comprising a disc body, first and second regions on the disc body having different characteristics of a scanned parameter, the second region situated adjacent the first region. Such an encoder disc is disclosed in RCA Technical Notes No. 834, May 14, 1969, a publication of RCA, Princton, N.J., pages 1-2.

This prior art encoder disc comprises an area within a closed curve which is opaque, while the outer portion of the disc is transparent. Four elongated photo cells are positioned in radial positions with respect to the disc, the cells being longer than the maximum radial distance across the transparent portion of the disc. The four photo cells are arranged at the positions corresponding to 0°, 90°, 180°, and 270°, respectively, of the disc. Two photo cells arranged in line, for example at the positions of 90° and 270°, respectively, are connected to a processing circuit comprising an arrangement of operational amplifiers and resistors. The output of the circuit provides a signal which varies in a sine wave manner with the rotation of the disc, when a light source shines through the transparent portion of the disc and illuminates those portions of the photo cells which are not occulted by the opaque area within the closed curve.

"Measurement Techniques", Vol. 31, No. 11, November 1988, New York, U.S., pages 1053-1055 discloses a small-size angle-code converter. The measuring section of this prior art converter includes an optically coupled light source, a measuring disc with a plurality of concentric circular tracks, and a photo electric reader which crosses the axis of rotation of the measuring disc. The center of the concentric circular tracks is displaced from the center of rotation of the measuring disc. The electronic circuit of the converter includes a photo electric reader composed of charge-coupled devices (CCD), an amplifier, and a comparator. During each scan of the photo electric reader, the converter output consists of a sequence of pulse trains, the total number of such trains in a sequence depending on the number of tracks in the measuring disc. The envelope of each such sequence repeats the distribution of the light flux on the photo electric reader modulated by the measuring disc. The variation of the converter code produced by a micro computer processing a sequence of pulse trains is a cosine function of the angle of rotation of the measuring disc.

Encoders such as shaft angle encoders have been used for some time to provide an electronic signal indicative of the angular position of the shaft to which the encoder is mounted. Such encoders include discs having either absolute or incremental tracks, or a combination of the two. Absolute tracks provide a parameter that varies in accordance with the absolute position of the disc, while incremental tracks provide repetitive signals that can be counted to determine movement away from a reference position.

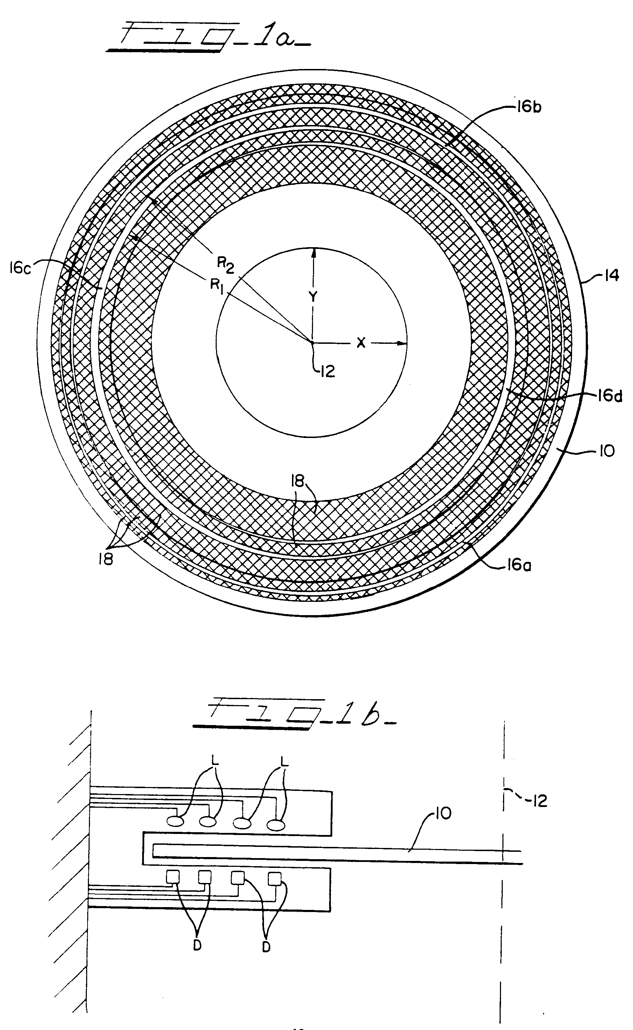

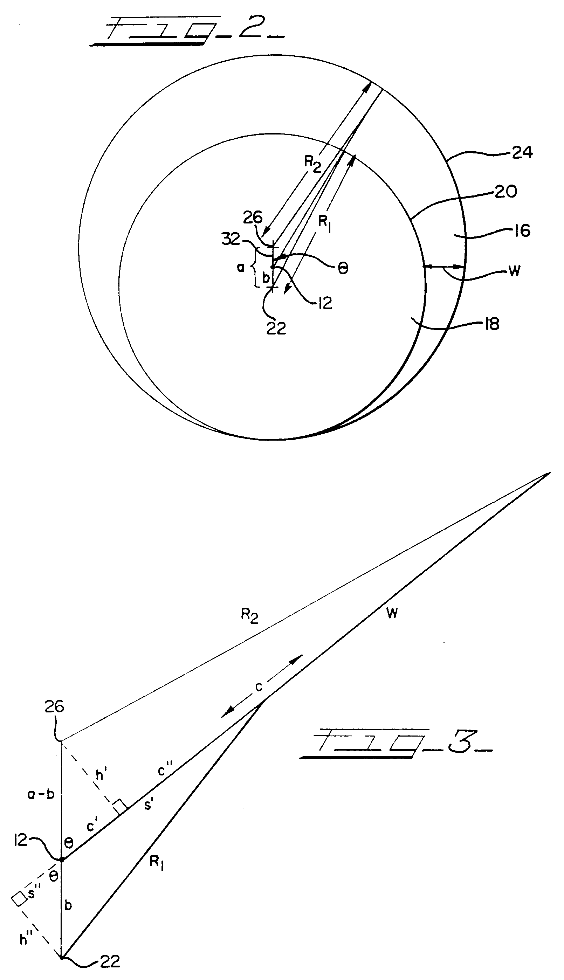

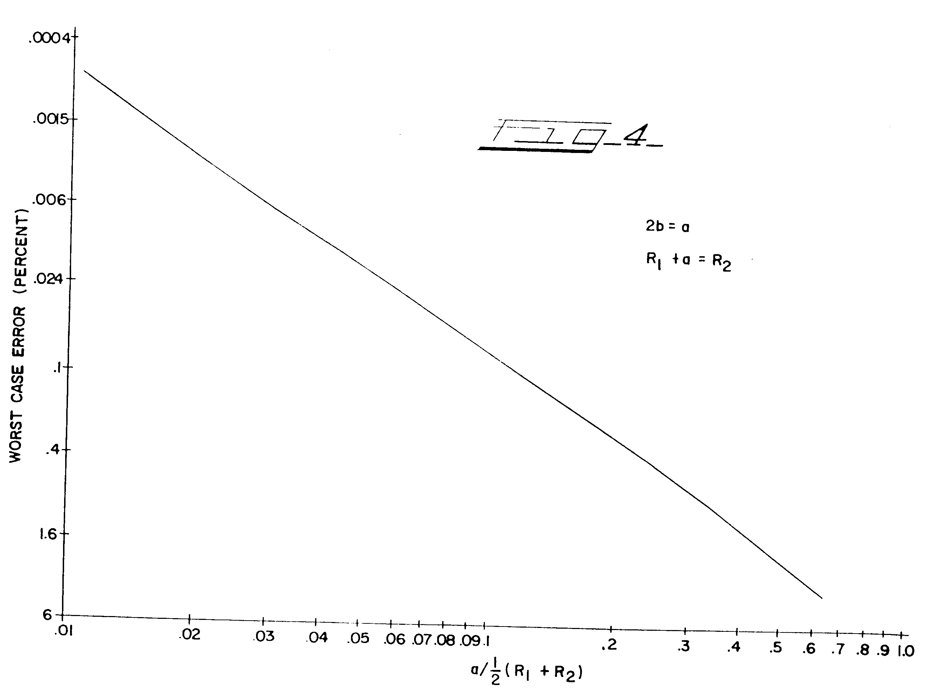

European Patent Application EP 0 276 402 discloses an encoder disc which, as shown in Figure 2, includes both incremental and absolute tracks. Note in particular the outermost track which varies in width in a linear manner between a minimum width at 0 degrees and a maximum width at 180 degrees. This width variation is indicated in Figure 4, where the signal U1 is shown as triangular in shape.

Though the triangular waveform produced by the encoder disc of the above-identified EP 0 276 402 is suitable for some applications, it is often preferable to provide a measuring track which varies in width sinusoidally rather than linearly. Such sinusoidal waveforms eliminate the cusps of triangular waveforms and associated scanning difficulties. Additionally, processing systems for sinusoidal signals are commonly available.

It is an object of the present invention to provide an improved encoder disc for an encoder of the type described above which provides such a sinusoidally varying measuring track in a particularly simple and cost effective manner.

## SUMMARY OF THE INVENTION

According to this invention an encoder disc is provided for an encoder of the type comprising a scanning unit for scanning the encoder disc to measure an angular position characteristic of the encoder disc, the encoder disc comprising a disc body, first and second regions on the disc body having different characteristic of a scanned parameter, the second region situated adjacent the first region, wherein the first region is defined between two circles of different radii and offset centers positioned such that the smaller circle is contained within the larger circle, such that the first region forms a measuring track which varies in width substantially sinusoidally around the disc body.

This arrangement has been found to provide a measuring track which approximates a sinusoidal variation in track width with surprising accuracy.

In the preferred embodiment described below, one of the two regions is substantially opaque and the other is substantially transparent; preferably the first region is substantially transparent. According to a preferred embodiment of the invention the two circles are substantially tangent at one point. The two circles may have centers offset by an amount, such that the ratio of this amount divided by the average of the radii of the two circles is less than 0.65. According to additional preferred embodiments of the invention, this ratio may be less than 0.25, less than 0.06, or less than 0.03, respectively.

According to a further embodiment of the invention, the disc body defines a central axis of rotation, the first and second regions differ in light transmission characteristics of the scanned parameter, the central axis and the centers of the two circles are colinear along an offset axis with the central axis positioned between the two centers, the center of one of the circles is offset from the central axis by a first amount, and the center of the other of the circles is offset from the central axis by an amount substantially equal to the first amount.

According to an additional preferred embodiment of the invention, the two circles are offset from the central axis by amounts which differ from one another by about 0.25 %. Preferably the disc body defines a periphery at a constant radius from the central axis.

According to additional preferred embodiments of the invention, the ratio of two times the first amount divided by the average of the radii of the two circles is less than 0.65, less than 0.25, less than 0.06, or less than 0.03, respectively.

The invention itself, together with further objects and attendant advantages, will best be understood by reference to the following detailed description, taken in conjunction with the accompanying drawings.

## BRIEF DESCRIPTION OF THE DRAWINGS

Figure 1a is a plan view of an encoder disc which incorporates a presently preferred embodiment of this invention.

Figure 1b is a schematic representation of an encoder which incorporates the encoder disc of Figure 1.

Figure 2 is a schematic representation of the disc of Figure 1, in which proportions have been exaggerated for clarity of illustration.

Figure 3 is a geometrical construct used below to analyze the schematic representation of Figure 2.

Figure 4 is a graph showing errors associated with the encoder disc of Fig. 1.

## DETAILED DESCRIPTION OF THE PRESENTLY PREFERRED EMBODIMENTS

Turning now to the drawings, Figure 1a shows a plan view of an encoder disc which incorporates a presently preferred embodiment of this invention. This disc includes a disc body 10 which defines a central axis of rotation 12 and a periphery 14. Typically, the periphery 14 is at a fixed radius from the central axis 12. The disc body 10 defines four first regions 16a-16d, and a second region 18 which differs in characteristics of a scanned parameter such as light transmission. Typically, one of the first and second regions 16a-16d, 18 is opaque, and the other is transparent. In this embodiment it is the first regions 16a-16d that are transparent. The second region 18 is immediately adjacent to the first regions 16a-16d and in this embodiment surrounds them. The following discussion applies equally to all of the first regions 16a-16d, and the reference number 16 will be used generically to refer to any of the first regions 16a-16d.

As best shown in Figure 2, the first region 16 is defined as the region between an inner circle 20 having a radius $R_1$ and a center 22, and an outer circle 24 having a radius $R_2$ and a center 26. The central axis 12 and the centers 22, 26 are colinear along an offset axis 32, with the central axis 12 positioned between the two centers 22, 26. The offset of the centers 22, 26 is only discernable in the enlarged representation of Figure 2, not in the plan view of of Figure 1a.

Figure 1b schematically shows the manner in which the encoder disc body 10 can be used in an encoder. As shown in Figure 1b the encoder includes a scanning unit which is fixedly mounted with respect to the axis of rotation 12 of the disc body 10. The scanning unit includes a set of lamps L which generate light that passes through the disc body 10 to respective light sensors D. The amplitude of a signal generated by one of the sensors D is proportional to the amount of light passing through the respective first region 16. This parameter varies as a function of the width of the first region 16, which width is measured with respect to the central axis 12 and is indicated by the reference symbol W in Figure 2. As the disc body 10 makes one complete revolution the signals generated by the sensors D vary from a minimum value at a selected angular position to a maximum value at the selected angular position plus 180 degrees and back to the minimum value. Surprisingly, it has been discovered that the width W of the first region 16 varies in a sinusoidal manner to an excellent approximation. Thus, the signal generated by the sensor D varies sinusoidally (to a close approximation) between the minimum and maximum values as the disc body 10 makes one complete revolution. As used herein, a sinusoidal variation includes a sine wave with a DC offset.

The encoder disc of Figure 1 can be manufactured by a variety of methods, including the conventional photolithographic methods currently used to manufacture encoder discs. For example, one surface of the encoder disc body 10 can be plated with an opaque metal layer, and then photoresist techniques can be used to remove the opaque metal layer in the first region 16 bounded by the inner and outer circles 20, 24. One approach to fabrication is to coat the opaque metal layer with a photoresist, then to expose the photoresist outside the outer circle 24 and inside the inner circle, and then to use conventional techniques to remove the metal layer between the two circles 20, 24. Another possible approach is to expose such a layer of photoresist between the circles 20, 24 in a raster scan so as to expose the entire first region 16.

The sketch of Figure 2 will be used to clarify the manner in which the width W of the first region 16 varies in an approximately sinusoidal manner. As shown in Figure 2, the distance between the two centers 22, 26 is indicated by the reference symbol a, while the distance between the central axis 12 and the center 22 is indicated by the symbol b. As shown, the width W is measured along a radius proceeding from the central axis 12.

Using the notation defined in the enlarged geometrical construct of Figure 3, the following geometrical identities are apparent:

$$h' = (a - b)\sin\theta; \quad (EQ\ 1)$$
$$C' = (a - b)\cos\theta; \quad (EQ\ 2)$$
$$C''^2 = R_2^2 - h'^2. \quad (EQ\ 3)$$

C'' can then be expressed as follows:

$$C'' = (R_2^2 - h'^2)^{1/2} = (R_2^2 - [(a - b)\sin\theta]^2)^{1/2}. \quad (EQ\ 4)$$

C, which equals C' plus C'', can be expressed as follows:

$$C = C' + C'' = (a - b)\cos\theta + (R_2^2 - [(a - b)\sin\theta]^2)^{1/2}. \quad (EQ\ 5)$$

Similarly, the following three geometrical identities obtain:

$$h'' = b\sin\theta; \quad (EQ\ 6)$$
$$s'' = b\cos\theta; \quad (EQ\ 7)$$
$$(s' + s'')^2 = R_1^2 - h''^2 \quad (EQ\ 8)$$

These identities can be used to calculate s' as follows:

$$s' = (R_1^2 - h''^2)^{\frac{1}{2}} - s''; \quad (EQ.\ 9)$$

$$= (R_1^2 - (b\sin\theta)^2)^{\frac{1}{2}} - b\cos\theta. \quad (EQ.\ 10)$$

The width W as shown in the geometrical construct of Figure 3 is equal to C-s'. Using the identities set out above, W can be expressed as follows:

$$W = c - s;'$$
$$= (a-b)\cos\theta + (R_2^2 - [(a-b)\sin\theta]^2)^{\frac{1}{2}} - \quad (EQ.\ 11)$$
$$(R_1^2 - (b\sin\theta)^2)^{\frac{1}{2}} + b\cos\theta;$$

$$= a\cos\theta + (R_2^2 - [(a-b)\sin\theta]^2)^{\frac{1}{2}} - \quad (EQ.\ 12)$$
$$(R_1^2 - (b\sin\theta)^2)^{\frac{1}{2}}.$$

For the specific case where b=0 (i.e. where the inner circle 20 is centered on the central axis 12) EQ 12 simplifies as follows:

$$W = a\cos\theta + (R_2^2 - (a\sin\theta)^2)^{1/2} - R_1 \text{ (for b = 0). } (EQ.\ 13)$$

Given that the desired formula for W is W=a+a\cos\theta, EQ 13 indicates an error equal to the following:

$$Error = (R_2^2 - (a\sin\theta)^2)^{1/2} - R_1 - a. \quad (EQ.\ 14)$$

Similarly, when the two circles 20, 24 are symmetrically positioned with respect to the central axis 12, i.e. where a=2b and R2=R1+2b, EQ 12 simplifies as follows:

$$W = a\cos\theta + (R_2^2 - (b\sin\theta)^2)^{1/2} - (R_1^2 - (b\sin\theta)^2)^{1/2}. \quad (EQ\ 15)$$

In this case, W again is desired to equal a+a\cos\theta, and the error between the desired and actual values of W is indicated as follows:

$$Error = (R_2^2 - (b\sin\theta)^2)^{1/2} - (R_1^2 - (b\sin\theta)^2)^{1/2} - a. \quad (EQ\ 16)$$

Analysis has shown that the error is minimized when b is selected to approximately equal ½a. The minimum error is found at a point where b is slightly less than $\frac{1}{2}$a, where the offsets of the two circles (b and a-b) differ from one another by about 0.25%.

Figure 4 is a graph showing the magnitude of the worst case error for the situation where the two circles are tangent at one point and 2b=a. In Figure 4 the X axis indicates the accuracy of the approximation (worst case percentage error) and the Y axis indicates the ratio of the maximum track width (a) divided by the average of the radii of the two circles that define the track ($\frac{1}{2}(R_1+R_2)$). Note that for a 4 bit encoder (which requires an error less than one part in 16) $a/\frac{1}{2}(R_1+R_2)$ must be less than 0.65. Similarly, for 8, 12 and 14 bit encoders (which require an error of less than one part in 256,4096 and 16,389, respectively) $a/\frac{1}{2}(R_1+R_2)$ must be less than 0.25, 0.06 and 0.03, respectively.

The values of $R_1$, $R_2$, a and b can be chosen to fit the application. Simply by way of example, the following table defines the dimensions of the embodiment of Figure 1a in millimeters.

| First Region | $2R_2$ $2R_1$ | Center | |
| --- | --- | --- | --- |
| | | X | Y |
| 16a | 42.05 | 0 | -0.120 |
| | 41.55 | 0 | +0.120 |
| 16b | 40.05 | 0 | +0.120 |
| | 39.55 | 0 | -0.120 |
| 16c | 36.16 | -0.120 | 0 |
| | 35.50 | +0.120 | 0 |
| 16d | 33.53 | +0.120 | 0 |
| | 32.88 | -0.120 | 0 |

From the foregoing, it should be apparent that an encoder disc has been described which provides the desired sinusoidally varying measuring track in a particularly simple manner. Of course, the measuring tracks described above will often be combined with other tracks, either absolute or incremental, on the encoder disc. For example, four sets of the measuring tracks described above can be provided on an encoder disc at 0 degrees, 90 degrees, 180 degrees and 270 degrees in order to produce a highly accurate substitute for a magnetic resolver or Inductosyn (Registered Trademark) In many applications it will be desirable to make the two circles 20, 24 almost tangent at one point to minimize the unchanging portion of the width W. However, tangency is not required in all applications.

Of course, a wide range of materials and fabrication techniques can be used to implement this invention. If desired, the first region 16 can be opaque and the second region 18 transparent. Furthermore, this invention is not limited to use with optical encoders, but can also be used with capacitive and inductive encoders. It is therefore intended that the foregoing detailed description be regarded as illustrative rather than limiting, and that it be understood that it is the following claims, which are intended to define the scope of this invention.

## Claims

1. An encoder disc (10, 14) for an encoder of the type comprising a scanning unit (L, D) for scanning said encoder disc (10, 14) to measure an angular position characteristic of said encoder disc (10, 14), said encoder disc (10, 14) comprising a disc body (10), first (16) and second regions (18) on said disc body (10) having different characteristics of a scanned parameter, said second region (18) situated adjacent said first region (16), characterized in that said first region (16) is defined between two circles (24, 20) of different radii ($R_2$, $R_1$) and offset (a) centers (26, 22) positioned such that the smaller circle (20) is contained within the larger circle (24), said first region (16) forming a measuring track (16a, 16b, 16c, 16d) which varies in width (W) substantially sinusoidally around said disc body (10).

2. An encoder disc according to claim 1, characterized in that one (18) of the two regions (16, 18) is substantially opaque and the other (16) is substantially transparent.

3. An encoder disc according to claim 2, characterized in that the first region (16) is substantially transparent.

4. An encoder disc according to any one of claims 1 to 3, characterized in that the two circles (24, 20) are substantially tangent at one point.

5. An encoder disc according to any one of claims 1 to 4, characterized in that the two circles (24, 20) have centers (26, 22) offset by an amount (a), and that the radio of (a) divided by the average of the radii ($R_2$, $R_1$) of the two circles (24, 20) is less than 0.65.

6. An encoder disc according to any one of claims 1 to 4, characterized in that the two circles (24, 20) have centers (26, 22) offset by an amount (a), and that the ratio of (a) divided by the average of the radii ($R_2$, $R_1$) of the two circles (24, 20) is less than 0.25.

7. An encoder disc according to any one of claims 1 to 4, characterized in that the two circles (24, 20) have centers (26, 22) offset by an amount (a), and that the ratio of (a) divided by the average of the radii ($R_2$, $R_1$) of the two circles (24, 20) is less than 0.06.

8. An encoder disc according to any one of claims 1 to 4, characterized in that the two circles (24, 20) have centers (26, 22) offset by an amount (a), and that the ratio of (a) divided by the average of the radii ($R_2$, $R_1$) of the two circles (24, 20) is less than 0.03.

9. An encoder disc according to any one of claims 1 to 4, characterized in that the disc body (10) defines a central axis (12) of rotation, the first and second regions (16, 18) differ in light transmission characteristics of the scanned parameter, the central axis (12) and the centers (26, 22) of the two circles (24, 20) are colinear along an offset axis (32) with the central axis (12) positioned between the two centers (26, 22), the center (22) of one of the circles (20) is offset from the central axis (12) by a first amount (b), and that the center (26) of the other (24) of the circles (20, 24) is offset from the central axis (12) by an amount (a-b) substantially equal to the first amount (b).

10. An encoder disc according to claim 9, characterized in that the two circles (20, 24) are offset from the central axis (12) by amounts (b, a-b) which differ from one another by about 0.25 %.

11. An encoder disc according to claims 9 or 10, characterized in that the disc body (10) defines a periphery (14) at a constant radius from the central axis (12).

12. An encoder disc according to claim 9, characterized in that the ratio of two times the first amount (b) divided by the average of the radii ($R_1$, $R_2$) of the two circles (20, 24) is less than 0.65.

13. An encoder disc according to claim 9, characterized in that the ratio of two times the first amount (b) divided by the average of the radii ($R_1$, $R_2$) of the two circles (20, 24) is less than 0.25.

14. An encoder disc according to claim 9, characterized in that the ratio of two times the first amount (b) divided by the average of the radii ($R_1$, $R_2$) of the two circles (20, 24) is less than 0.06.

15. An encoder disc according to claim 9, characterized in that the ratio of two times the first amount (b) divided by the average of the radii ($R_1$, $R_2$) of the two circles (20, 24) is less than 0.03.

**Patentansprüche**

1. Codierplatte (10, 14) für einen Codierer des Typs mit einer Scan-Einheit (L, D) zum Scannen der Codierplatte (10, 14) zum Messen einer Winkelposition, die charakteristisch für die Codierplatte (10, 14) ist, wobei die Codierplatte (10, 14) einen Plattenkörper (10) umfaßt, wobei erste (16) und zweite (18) Bereiche auf dem Plattenkörper (10)
verschiedene Charakteristika eines gescannten Parameters haben, wobei der zweite Bereich (18) neben dem ersten Bereich (16) gelegen ist,
dadurch **gekennzeichnet**, daß
der erste Bereich (16) definiert ist zwischen zwei Kreisen (24, 20) verschiedener Radii ($R_2$, $R_1$) und Offset

(a)-Mittelpunkte (26, 22) so positioniert sind, daß der kleinere Kreis (20) enthalten ist innerhalb des größeren Kreises (24), wobei der erste Bereich (16) eine Meßspur (16a, 16b, 16c, 16d) bildet, die im wesentlichen sinusoidal in der Breite (W) um den Plattenkörper (10) variiert.

2. Codierplatte nach Anspruch 1,
dadurch **gekennzeichnet**, daß
einer (18) der zwei Bereiche (16, 18) im wesentlichen opak und der andere (16) im wesentlichen transparent ist.

3. Codierplatte nach Anspruch 2,
dadurch **gekennzeichnet**, daß
der erste Bereich (16) im wesentlichen transparent ist.

4. Codierplatte nach einem der Ansprüche 1 bis 3,
dadurch **gekennzeichnet**, daß
die zwei Kreise (24, 20) im wesentlichen an einem Punkt tangential sind.

5. Codierplatte nach einem der Ansprüche 1 bis 4,
dadurch **gekennzeichnet**, daß
die zwei Kreise (24, 20) Mittelpunkte (26, 22) haben, die verschoben sind um einen Betrag (a), und daß das Verhältnis von (a) geteilt durch den Mittelwert der Radii ($R_2$, $R_1$) der zwei Kreise (24, 20) kleiner als 0,65 ist.

6. Codierplatte nach einem der Ansprüche 1 bis 4,
dadurch **gekennzeichnet**, daß
die zwei Kreise (24, 20) Mittelpunkte (26, 22) haben, die um einen Betrag (a) verschoben sind, und daß das Verhältnis (a) geteilt durch den Mittelwert der Radii ($R_2$, $R_1$) der zwei Kreise (24, 20) kleiner als 0,25 ist.

7. Codierplatte nach einem der Ansprüche 1 bis 4,
dadurch **gekennzeichnet**, daß
die zwei Kreise (24, 20) Mittelpunkte (26, 22) haben, die um einen Betrag (a) verschoben sind, und daß das Verhältnis. von (a) geteilt durch die Mittelwerte der Radii ($R_2$, $R_1$) der zwei Kreise (24, 20) kleiner als 0,06 ist.

8. Codierplatte nach einem der Ansprüche 1 bis 4,
dadurch **gekennzeichnet**, daß
die zwei Kreise (24, 20) Mittelpunkte (26, 22) haben, die um einen Betrag (a) verschoben sind, und daß das Verhältnis von (a) geteilt durch den Mittelwert der Radii ($R_2$, $R_1$) der zwei Kreise (24, 20) kleiner als 0,03 ist.

9. Codierplatte nach einem der Ansprüche 1 bis 4,
dadurch **gekennzeichnet**, daß
der Plattenkörper (10) eine Rotationsmittelachse (12) definiert, wobei die ersten und zweiten Bereiche (16, 18) sich in der Lichtdurchlaß-Charakteristik des gescannten Parameters unterscheiden, die Mittelachse (12) und die Mittelpunkte (26, 22) der zwei Kreise (24, 20) kollinear entlang einer Offset-Achse (32), wobei die Mittelachse (12) zwischen den zwei Mittelpunkten (26, 22) positioniert ist, der Mittelpunkt (22) von einem der zwei Kreise (20) verschoben ist von der Mittelachse (12) um einen ersten Betrag (b) und daß der Mittelpunkt (26) des anderen (24) der Kreise (20, 24) verschoben ist von der Mittelachse (12) um einen Betrag (a-b) im wesentlichen gleich dem ersten Betrag (b).

10. Codierplatte nach Anspruch 9,
dadurch **gekennzeichnet, daß**
die zwei Kreise (20, 24) verschoben sind von der Mittelachse (12) um Beträge (b, a-b), welche voneinander um etwa 0,25 % differieren.

11. Codierplatte nach Anspruch 9 oder 10,
dadurch **gekennzeichnet**, daß
der Plattenkörper (10) eine Peripherie (14) definiert, bei einem konstanten Radius von der Mittenachse (12).

12. Codierplatte nach Anspruch 9,
dadurch **gekennzeichnet**, daß
das Verhältnis von zweimal des ersten Betrages (b) geteilt durch den Mittelwert der Radii ($R_1$, $R_2$) der zwei Kreise (20, 24) weniger als 0,65 ist.

13. Codierplatte nach Anspruch 9,
dadurch **gekennzeichnet**, daß
das Verhältnis von zweimal des ersten Betrages (b) geteilt durch den Mittelwert der Radii ($R_1$, $R_2$) der zwei Kreise (20, 24) weniger als 0,25 ist.

14. Codierplatte nach Anspruch 9,
dadurch **gekennzeichnet**, daß
das Verhältnis von zweimal des ersten Betrages (b) geteilt durch den Mittelwert der Radii ($R_1$, $R_2$) der zwei Kreise (20, 24) weniger als 0,06 ist.

15. Codierplatte nach Anspruch 9,
dadurch **gekennzeichnet**, daß
das Verhältnis von zweimal des ersten Betrages (b) geteilt durch den Mittelwert der Radii ($R_1$, $R_2$) der zwei Kreise (20, 24) weniger als 0,03 ist.


**Revendications**

1. Disque codeur (10, 14) pour un codeur du type comprenant une unité d'exploration (L, D) pour explorer le disque codeur (10, 14) afin de mesurer une position angulaire caractéristique du disque codeur (10, 14), le disque codeur (10, 14) comprenant un corps de disque (10), des première (16) et seconde (18) régions sur le corps du disque (10) ayant des caractéristiques différentes d'un paramètre exploré, la seconde région (18) située contiguë à la première région (16), caractérisé en ce que la première région (16) est définie entre deux cercles (24, 20) de rayons différents ($R_2$, $R_1$) et des centres décalés (a) (26, 22) positionnés de sorte que le cercle le plus petit (20) est contenu à l'intérieur du cercle plus large (24), la première région (16) formant une piste de mesure (16a, 16b, 16c, 16d) qui varie en largeur (W) de manière presque sinusoïdale autour du corps de disque (10).

2. Disque codeur selon la revendication 1, caractérisé en ce qu'une (18) des deux régions (16, 18) est pratiquement opaque et que l'autre (16) est pratiquement transparente.

3. Disque codeur selon la revendication 2, caractérisé en ce que la première région (16) est pratiquement transparente.

4. Disque codeur selon l'une quelconque des revendications 1 à 3, caractérisé en ce que les deux cercles (24, 20) sont pratiquement tangents en un point.

5. Disque codeur selon l'une quelconque des revendications 1 à 4, caractérisé en ce que les deux cercles (24, 20) ont des centres (26, 22) décalés d'une quantité (a), et que le rapport (a) divisé par la moyenne des rayons ($R_2$, $R_1$) des deux cercles (24, 20) est inférieur à 0,65.

6. Disque codeur selon l'une quelconque des revendications 1 à 4, caractérisé en ce que les deux cercles (24, 20) ont des centres (26, 22) décalés d'une quantité (a), et que le rapport de (a) divisé par la moyenne des rayons ($R_2$, $R_1$) des deux cercles (24, 20) est inférieur à 0,25.

7. Disque codeur selon l'une quelconque des revendications 1 à 4, caractérisé en ce que les deux cercles (24, 20) ont des centres (26, 22) décalés d'une quantité (a), et que le rapport de (a) divisé par la moyenne des rayons ($R_2$, $R_1$) des deux cercles (24, 20) est inférieur à 0,06.

8. Disque codeur selon l'une quelconque des revendications 1 à 4, caractérisé en ce que les deux cercles (24, 20) ont des centres (26, 22) décalés d'une quantité (a), et que le rapport de (a) divisé par la moyenne des rayons ($R_2$, $R_1$) des deux cercles (24, 20) est inférieur à 0,03.

9. Disque codeur selon l'une quelconque des revendications 1 à 4, caractérisé en ce que le corps du disque (10) définit un axe central (12) de rotation, les première et seconde régions (16, 18) diffèrent en caractéristiques de transmission de la lumière du paramètre exploré, l'axe central (12) et les centres (26, 22) des deux cercles (24, 20) sont colinéaires suivant un axe décalé (32) avec l'axe central (12) positionné entre les deux centre (26, 22), le centre (22) d'un des deux cercles (20) est décalé de l'axe central (12) d'une première quantité (b), et en ce que le centre (26) de l'autre (24) des deux cercles (20, 24) est décalé de l'axe central (12) d'une quantité (a-b) pratiquement égale à la première quantité (b).

10. Disque codeur selon la revendication 9, caractérisé en ce que les deux cercles (20, 24) sont décalés de l'axe central (12) des quantités (b, a-b) qui diffèrent l'une de l'autre d'environ 0,25 %.

11. Disque codeur selon la revendication 9 ou 10, caractérisé en ce que le corps du disque (10) définit une périphérie (14) à un rayon constant à partir de l'axe central (12).

12. Disque codeur selon la revendication 9, caractérisé en ce que le rapport de deux fois la première quantité (b) divisée par la moyenne des rayons ($R_1$, $R_2$) des deux cercles (20, 24) est inférieur à 0,65.

13. Disque codeur selon la revendication 9, caractérisé en ce que le rapport de deux fois la première quantité (b) divisée par la moyenne des rayons ($R_1$, $R_2$) des deux cercles (20, 24) est inférieur à 0,25.

14. Disque codeur selon la revendication 9, caractérisé en ce que le rapport de deux fois la première quantité (b) divisée par la moyenne des rayons ($R_1$, $R_2$) des deux cercles (20, 24) est inférieur à 0,06.

15. Disque codeur selon la revendication 9, caractérisé en ce que le rapport de deux fois la première quantité (b) divisée par la moyenne des rayons ($R_1$, $R_2$) des deux cercles (20, 24) est inférieur à 0,03.

FIG-1a-

FIG-1b-

FIG_2_

FIG_3_

FIG. 4

$2b = a$

$R_1 + a = R_2$

WORST CASE ERROR (PERCENT)

$a / \frac{1}{2} (R_1 + R_2)$